# EUROPÄISCHE PATENTSCHRIFT

(11) **EP 1 357 309 B1**
(45) Veröffentlichungstag und Bekanntmachung des Hinweises auf die Patenterteilung: **16.06.2010**
(21) Anmeldenummer: 03008527.8
(22) Anmeldetag: 12.04.2003
(51) Int. Cl.: F16D 48/08

(54) **Verfahren zur Steuerung eines Anfahrvorgangs mit einem Doppelkupplungsgetriebe**
Method for controlling the starting procedure of a dual clutch transmission
Méthode pour commander la procédure de démarrage d'une boîte de vitesse à double embrayage

(30) Priorität: 24.04.2002 DE 10218186
(43) Veröffentlichungstag der Anmeldung: 29.10.2003
(73) Patentinhaber: ZF FRIEDRICHSHAFEN Aktiengesellschaft, 88038 Friedrichshafen (DE)
(72) Erfinder: Paul, Andreas, 88045 Friedrichshafen (DE)

(56) Entgegenhaltungen:
- DE-A- 4 204 401
- DE-A- 10 043 060
- FR-A- 2 836 870

## Beschreibung

Die Erfindung betrifft ein Verfahren zur Steuerung eines Anfahrvorgangs eines Fahrzeugs mit einem Doppelkupplungsgetriebe.

Ein Doppelkupplungsgetriebe umfaßt zwei Teilgetriebe mit jeweils mehreren schaltbaren Gangstufen, wobei jedes Teilgetriebe durch eine eigene Kupplung mit einem Antriebsmotor drehmomentübertragend verbindbar ist, und die Teilgetriebe mit einem gemeinsamen Abtrieb verbunden sind. Die Übersetzungen der Gangstufen der beiden Teilgetriebe sind so aufeinander abgestimmt, dass zwei aufeinanderfolgende Gangstufen jeweils unterschiedlichen Teilgetrieben zugeordnet sind. Außerhalb von Gangstufenwechseln ist jeweils nur eine Kupplung geschlossen, so dass das Antriebsmoment von einem Teilgetriebe übertragen wird. Das andere Teilgetriebe ist während dieser Zeit lastfrei. Diese Phase wird genutzt, um in dem lastfreien Teilgetriebe eine neue Gangstufe einzulegen, wozu entsprechende elektrische, hydraulische oder elektromagnetische Stellglieder vorgesehen sind. Wirksam wird die neu eingelegte Gangstufe, wenn die diesem Teilgetriebe zugeordnete Kupplung geschlossen und die andere Kupplung geöffnet wird. Der Übergang des Drehmoments von der einen auf die andere Kupplung erfolgt in der Regel so, dass in einer Überschneidungsphase beide Kupplungen teilweise schlupfend an der Drehmomentübertragung beteiligt sind. Ein solches Doppelkupplungsgetriebe ist beispielsweise in der DE 42 04 401 A1 offenbart.

Im Gegensatz zu herkömmlichen Automatgetrieben, bei denen hydrodynamische Wandler als Anfahrelement zum Einsatz kommen, dient beim Doppelkupplungsgetriebe die der ersten Gangstufe zugeordnete Kupplung zum Anfahren, welche als nasse oder auch trockene Kupplung, wie beim Handschaltgetriebe, ausgebildet sein kann. Die thermische Belastbarkeit einer Trockenkupplung ist sehr begrenzt. Insbesondere längere Schlupfphasen, wie sie beim Anfahren oder im Stop-and-Go-Betrieb auftreten, führen zu hohen Temperaturen an den Reibbelägen der Kupplung. Insofern unterscheiden sich bekannte Doppelkupplungsgetriebe beim Anfahren nicht von einfachen automatisierten Schaltgetrieben, bei denen häufig die Motorleistung während des Anfahrvorgangs elektronisch begrenzt wird, solange die Anfahrkupplung schlupft. Dies vermindert die Anfangsbeschleunigung erheblich, was als sehr störend empfunden wird. Andererseits ist es aus Bauraum-, Gewichts- und Kostengründen unerwünscht, die der ersten Gangstufe zugeordnete Kupplung nur für den Anfahrvorgang noch größer zu dimensionieren.

Die DE 100 43 060 A1 offenbart ein Doppelkupplungsgetriebe mit zwei Teilgetrieben, bei dem während des Anfahrvorgangs zunächst beide Teilgetriebe an der Drehmomentübertragung beteiligt sind, indem beide Kupplungen der Doppelkupplung gleichzeitig angesteuert werden. Bei diesem bekannten Doppelkupplungsgetriebe wird bei einer thermischen Überlastung einer Kupplung diese Kupplung geöffnet und das gesamte Drehmoment über die jeweils andere Kupplung übertragen.

Schließlich ist aus der DE 100 15 296 A1 ein Doppelkupplungsgetriebe bekannt, bei welchem zu Beginn des Anfahrvorgangs zunächst beide Kupplungen einen Teil des Gesamtdrehmoments übertragen, und im weiteren Verlauf der Drehmomentanteil der einen Kupplung erhöht und Drehmomentanteilder anderen Kupplung verringert wird.

Beim Anfahren mit beiden Kupplungen des Doppelkupplungsgetriebes verteilt sich die Drehmoment-Belastung und die thermische Belastung auf die beiden Kupplungen, so dass auf eine Drosselung der Motorleistung während des Anfahrvorgangs verzichtet werden kann und optimale Anfahrleistungen erzielbar sind. Alternativ kann die dem ersten Gang zugeordnete Kupplung bei entsprechender Drosselung der Motorleistung kleiner dimensioniert werden.

Es hat sich jedoch gezeigt, dass die gleichzeitige Schlupfregelung der beiden Anfahrkupplungen unter bestimmtem Betriebsbedingungen problematisch ist. Außerdem wird während eines Anfahrvorgangs, bei dem auch die dem zweiten Gang zugeordnete Kupplung an der Drehmomentübertragung beteiligt ist, insgesamt mehr Reibarbeit und mehr Verschleiß erzeugt.

Der Erfindung liegt daher die Aufgabe zugrunde, ein verbessertes Verfahren anzugeben, das optimale Anfahrleistungen ermöglicht, und bei welchem eine verbesserte Schlupfregelung der beiden Anfahrkupplungen während des Anfahrvorgangs gegeben ist.

Diese Aufgabe wird mit einem, auch die Merkmale des kennzeichnenden Teils des Hauptanspruchs aufweisenden Verfahren gelöst. Vorteilhafte Ausgestaltungen und Varianten der Erfindung sind durch die weiteren Ansprüche gegeben.

Die zweite Kupplung bzw. das zweite Teilgetriebe brauchen gemäß der Erfindung nicht in jedem Fall beim Anfahrvorgang an der Drehmomentübertragung beteiligt zu sein. Während des Anfahrvorgangs ist in jedem Teilgetriebe jeweils die kleinste Gangstufe eingelegt, d. h., im ersten Teilgetriebe die erste Gangstufe und im zweiten Teilgetriebe die zweite Gangstufe. Beim Anfahren mit einer Antriebsmotorlast unterhalb einer Grenzlast kann sowohl die Drehmoment-Belastung als auch die thermische Belastung vollständig von der dem ersten Gang zugeordneten ersten Kupplung getragen werden. Eine gleichzeitige Regelung des Kupplungsschlupfs der ersten und der zweiten Kupplung ist insbesondere bei sehr geringen Antriebsmotorlasten problematisch und wird dadurch beim erfindungsgemäßen Verfahren vermieden. Mit nur einer Kupplung kann sehr feinfühlig angefahren werden.

Für hohe Anfahrbeschleunigungen, bei denen in der Regel die Antriebsmotorlast sowohl durch hohe Antriebsmotormomente als auch durch erhöhte Antriebsmotordrehzahlen gekennzeichnet ist, steht dennoch die Drehmomentkapazität beider Kupplungen zur Verfügung und die hohe thermische Belastung wird auf beide Kupplungen verteilt.

Die zweite Kupplung wird zusätzlich zur ersten Kupplung während des Anfahrvorgangs nur dann so weit geschlossen, dass sie ein Drehmoment überträgt, wenn eine bestimmte Antriebsmotorlast überschritten wird. Die Antriebsmotorlast kann z. B. einer durch einen DKI Sensor gemessenen Fahrpedalstellung entsprechen, einem in der Motor- oder Getriebesteuerung ermitteltes Drehmomentensignal oder auch einer Größe die abhängig von der Antriebsmotordrehzahl und dem Antriebsmotordrehmoment ermittelt wird. Bei den dabei anliegenden hohen Drehmomenten ist die gleichzeitige Regelung der beiden Kupplungen unproblematisch.

Als Anfahrvorgang wird die Periode bezeichnet, innerhalb der die erste Kupplung schlupft. Während des Anfahrvorgangs wird tritt solange, bis der Schlupf an der ersten Kupplung abgebaut ist, keine Verspannung im Getriebe auf, obwohl die zweite Kupplung einen Anteil des Drehmoments überträgt.

Eine Verspannung zwischen den beiden Teilgetrieben des Doppelkupplungsgetriebes kann vermieden werden, wenn die zweite Kupplung höchstens so lange geschlossen bleibt, d. h. schlupfend an der Drehmomentübertragung beteiligt ist, bis der Schlupf an der ersten Kupplung abgebaut ist.

Ebenso können Mittel zum Erfassen der thermischen Belastung der ersten Kupplung vorgesehen sein und die zweite Kupplung zusätzlich zur ersten Kupplung während des Anfahrvorgangs nur dann so weit geschlossen werden, dass sie ein Drehmoment überträgt, wenn ein thermischer Belastungsgrad der ersten Kupplung überschritten wird. Der thermische Belastungsgrad kann z. B. durch Temperatursensoren im Bereich der Reibflächen der Kupplung oder auch durch ein in der elektronischen Getriebesteuerung hinterlegtes, thermisches Modell der Kupplung ermittelt werden. Das bedeutet, dass die zweite Kupplung zusätzlich zur ersten Kupplung nur in den Fällen angesteuert wird, in denen sowohl die Antiebsmotorlast größer als die Grenzlast ist und außerdem ein thermischer Belastungsgrad der ersten Kupplung überschritten ist.

In einer Ausgestaltung der Erfindung wird der Anteil des von der zweiten Kupplung übertragenen Drehmoments abhängig von der Last bzw. dem Grad der thermischen Belastung der ersten Kupplung eingesteuert, wobei höheren Belastungen bzw. einem höheren thermischen Belastungsgrad ein höherer Drehmomentanteil der zweiten Kupplung zugeordnet wird.

Wenn jedoch beispielsweise die thermische Belastung der ersten Kupplung so hoch ist, dass eine Abkühlphase notwendig ist, kann in einer nicht erfindungsgemäßen Betriebsart während des Anfahrvorgangs zunächst ausschließlich die zweite Kupplung geschlossen werden und die erste Kupplung erst dann geschlossen werden, wenn der Schlupf der ersten Kupplung einen bestimmten Wert unterschreitet, um dann die erste Gangstufe einzulegen. Weiterhin ist es natürlich auch möglich, ausschließlich in der zweiten Gangstufe anzufahren, so lange, bis der Schlupf an der zweiten Kupplung abgebaut ist. Diese nicht erfindungsgemäße Betriebsart eignet sich auch für einen Notbetrieb, wenn die erste Kupplung ausgefallen ist.

Schließlich wird Schutz begehrt für ein Doppelkupplungsgetriebe mit einer elektronischen Steuereinheit, in welcher ein Datenverarbeitungsprogramm zur Durchführung des erfindungsgemäßen Verfahrens abgelegt ist. Bei der Anwendung des erfindungsgemäßen Verfahrens werden die Reibverluste dann besonders klein, wenn der Stufensprung zwischen der ersten und der zweiten Gangstufe kleiner als 1,5 ist.

Die Erfindung wird anhand der beiliegenden Figuren näher erläutert, wobei
- Fig. 1: schematisch einen Aufbau eines Doppelkupplungsgetriebes;
- Fig. 2: den zeitlichen Verlauf von Motor-, Kupplungs- und Schlupfdrehzahlen während eines Anfahrvorgangs und
- Fig. 3: beispielhaft die Aufteilung des Antriebsmotormoments auf die beiden Kupplungen zeigen.

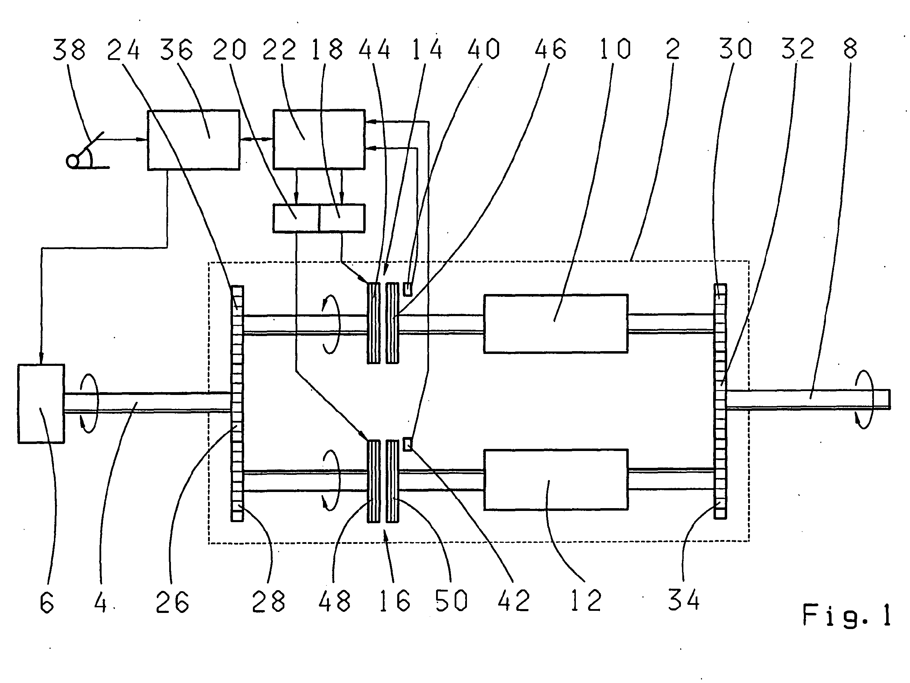

In Fig. 1 ist mit 2 ein Doppelkupplungsgetriebe bezeichnet, das über eine eingangsseitige Welle 4 mit einem Antriebsmotor 6 verbunden ist und eine Abtriebswelle 8 aufweist, welche trieblich mit nicht dargestellten Antriebsrädern eines Fahrzeugs verbunden ist. Das Doppelkupplungsgetriebe weist ein erstes Teilgetriebe 10 und ein zweites Teilgetriebe 12 auf. Dem ersten Teilgetriebe 10 ist eine erste Kupplung 14 und dem zweiten Teilgetriebe 12 eine zweite Kupplung 16 zugeordnet. Die beiden Kupplungen 14, 16 sind über Magnetventile 18, 20 von der elektronischen Getriebesteuerung 22 ansteuerbar, so dass das Drehmoment des Antriebsmotors 6 wahlweise über das erste Teilgetriebe 10 oder das zweite Teilgetriebe 12 zur Abtriebswelle 8 übertragbar ist. Die antriebsseitige Hälfte der Kupplung 14 ist mit 44 und die abtriebsseitige Hälfte der Kupplung 14 mit 46 bezeichnet, entsprechend ist die antriebsseitige Hälfte der Kupplung 16 mit 48 und die abtriebsseitige Hälfte der Kupplung 16 mit 50 bezeichnet. In der schematischen Darstellung sind Stirnräder 24, 26, 28, 30, 32, 34 gezeigt, welche die triebliche Verbindung der Antriebswelle 4 und der Abtriebswelle 8 mit den Ein- bzw. Ausgängen der Teilgetriebe 10, 12 herstellen.

Das erfindungsgemäße Verfahren beschränkt sich jedoch nicht auf ein Doppelkupplungsgetriebe mit der gezeigten Anordnung. Insbesondere ist es auch für Doppelkupplungsgetriebe geeignet, bei denen die beiden Teilgetriebe derart angeordnet sind, dass die Antriebswelle(n) und/oder die Vorgelegewelle(n) jeweils koaxial zueinander angeordnet sind. Die elektronische Motorsteuerung 36 empfängt ein Signal eines Fahrpedalgebers 38, welches zur Bestimmung der Antriebsmotorlast verwendet wird.

Jedes der beiden Teilgetriebe 10, 12 umfaßt mehrere schaltbare Gangstufen, wobei nicht gezeigte, von der Getriebesteuerung 22 angesteuerte Aktuatoren vorgesehen sind, welche die gewünschten Gangstufen in den Teilgetrieben einlegen. Der ersten Kupplung 14 und der zweiten Kupplung 16 ist jeweils ein Temperatursensor 40, 42 zur Erfassung des thermischen Belastungsgrades der Kupplungen zugeordnet.

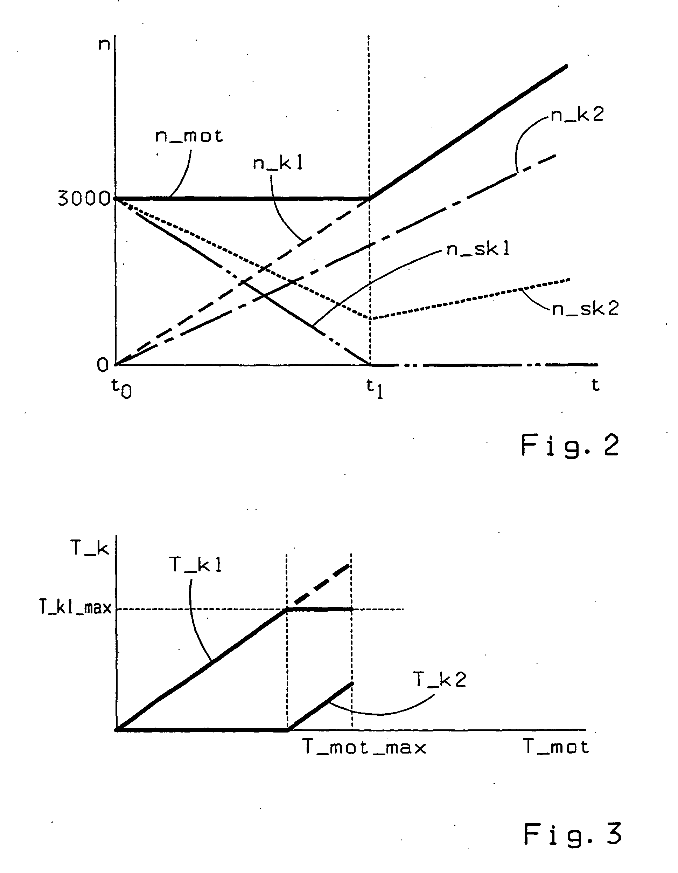

Fig. 2 zeigt während eines Anfahrvorgangs den zeitlichen Verlauf der
- Motordrehzahl n_mot,
- Drehzahl der abtriebsseitigen Hälfte 46 der ersten Kupplung 14 n_k1,
- Drehzahl der abtriebsseitigen Hälfte 50 der zweiten Kupplung 16 n_k2,
- Schlupf der ersten Kupplung 14 n_sk1 und
- Schlupf der zweiten Kupplung 16 n_sk2.

Im Zeitabschnitt zwischen t_0 und t_1 liegt am Motor eine konstante Drehzahl n_mot von z. B. 3 000 1/min an. In diesem Zeitraum wird der Schlupf n_sk1 von 3 000 auf Null abgebaut und die Drehzahl n_k1 von Null auf 3 000 1/min erhöht. Während im ersten Teilgetriebe 10 (Fig. 1) die erste Gangstufe eingelegt ist, ist im zweiten Teilgetriebe 12 die zweite Gangstufe eingelegt. Entsprechend den verschiedenen Übersetzungen dieser beiden Gangstufen erhöht sich die Drehzahl an der zweiten Kupplung n_k2 in der Zeit zwischen t_0 und t_1 auf einen Wert, der unterhalb des Wertes der ersten Kupplung liegt. Der Schlupf wird zwar zwischen t_0 und t_1 zunehmend kleiner, jedoch nicht bis auf Null abgebaut. Spätestens zum Zeitpunkt t_1, zu dem der Schlupf n_sk1 an der ersten Kupplung abgebaut ist und diese Kupplung ganz geschlossen wird (indem z. B. der hydraulische Druck einen Maximalwert einnimmt), wird die Kupplung 2 ganz geöffnet, so dass sie kein Drehmoment mehr überträgt. Auf diese Weise werden Verspannungen im Getriebe vermieden.

Die in Fig. 2 dargestellten Drehzahlverläufe dienen der Erläuterung des Sachverhalts und weichen mehr oder weniger von tatsächlichen Drehzahlverläufen ab.

Die Aufteilung der Drehmomentanteile zwischen der ersten Kupplung 14 und der zweiten Kupplung 16 kann beispielsweise wie in Fig. 3 gezeigt erfolgen. In Fig. 3 ist der Drehmomentanteil der ersten Kupplung 14 mit T_k1 und der Drehmomentanteil der zweiten Kupplung 16 mit T_k2 bezeichnet. Solange die Antriebsmotorlast, die in diesem Fall dem Motordrehmoment entspricht kleiner ist als der Wert T_k1_max, wird das gesamte Antriebsmoment des Antriebsmotors von der ersten Kupplung 14 bzw. dem ersten Teilgetriebe 10 übertragen. Wird in der elektronischen Getriebesteuerung 22 festgestellt, dass das Motormoment diesen Wert überschreitet, wird die zweite Kupplung 16 über das Magnetventil 20 so weit geschlossen, dass der über den Wert T_k1_max hinausgehende Anteil des Motormoments t_mot von der zweiten Kupplung 16 bzw. dem zweiten Teilgetriebe 12 übertragen wird. Auf diese Weise ist gewährleistet, dass die erste Kupplung 14 nicht überlastet wird und es steht die volle Motorleistung von Anfang an zur Verfügung, da diese nicht gedrosselt zu werden braucht, um die Kupplung 14 zu schützen.

Das erfindungsgemäße Verfahren ermöglicht höhere Anfangsbeschleunigungen und begrenzt das Anfahren mit beiden Kupplungen auf die Fälle, wo ansonsten die erste Kupplung überlastet würde.

### Bezugszeichen

- 2: Doppelkupplungsgetriebe
- 4: Eingangswelle
- 6: Antriebsmotor
- 8: Abtriebswelle
- 10: erstes Teilgetriebe
- 12: zweites Teilgetriebe
- 14: erste Kupplung
- 16: zweite Kupplung
- 18: Magnetventil
- 20: Magnetventil
- 22: elektronische Getriebesteuerung
- 24, 26, 28,: Stirnräder
- 30, 32, 34: Stirnräder
- 36: elektronische Motorsteuerung
- 38: Fahrpedal
- 40, 42: Temperatursensoren
- 44, 46, 48, 50: Kupplungshälften

- n_mot: Motordrehzahl
- n_k1, n_k2: Kupplungsdrehzahlen
- n_sk1, n_sk2: Schlupfe
- t_0, t_1: Zeitpunkte
- T_mot: Motormoment
- T_k: Kupplungsmoment

## Patentansprüche

1. Verfahren zur Steuerung eines Anfahrvorgangs eines Fahrzeugs mit einem Doppelkupplungsgetriebe (2) mit einer elektronischen Steuerungseinrichtung (22, 36), wobei das Doppelkupplungsgetriebe (2) ein erstes und ein zweites Teilgetriebe (10, 12) umfasst, und jedes Teilgetriebe (10, 12) mehrere schaltbare Gangstufen aufweist, das erste Teilgetriebe (10) durch eine erste Kupplung (14) und das zweite Teilgetriebe (12) durch eine zweite Kupplung (16) mit einem Antriebsmotor trieblich verbindbar ist, und die Teilgetriebe (10, 12) mit einer gemeinsamen Antriebswelle (8) verbunden sind, wobei eine erste Gangstufe des Doppelkupplungsgetriebes (2) dem ersten Teilgetriebe (10) und eine zweite Gangstufe des Doppelkupplungsgetriebes (2) dem zweiten Teilgetriebe (12) zugeordnet ist, wobei während des Anfahrvorgangs im ersten Teilgetriebe (10) die erste Gangstufe und im zweiten Teilgetriebe (12) die zweite Gangstufe einlegbar ist und die zweite Kupplung (16) so weit schließbar ist, dass sie zumindest einen Teil des vom Antriebsmotor (6) auf die Antriebswelle (8) übertragenen Drehmoments schlupfend überträgt, **dadurch gekennzeichnet, dass** Mittel (38, 36) zum Erfassen einer Antriebsmotorlast vorgesehen sind, dass Mittel zum Vergleichen der erfassten Antriebsmotorlast (T_k1) mit einer Grenz-Antriebsmotorlast (T_k1_max) vorgesehen sind und die zweite Kupplung (16) zusätzlich zur ersten Kupplung (14) während des Anfahrvorgangs nur dann so weit geschlossen wird, dass sie ein Drehmoment (T_k2) überträgt, wenn die erfasste Antriebsmotorlast größer ist als die Grenz-Antriebsmotorlast.

2. Verfahren nach Anspruch 1, **dadurch gekennzeichnet, dass** die zweite Kupplung (16) höchstens so lange geschlossen bleibt, bis der Schlupf (n_sk1) an der ersten Kupplung (16) abgebaut ist.

3. Verfahren nach Anspruch 1 oder 2, **dadurch gekennzeichnet, dass** die Antriebsmotorlast abhängig von einer Fahrpedalstellung bestimmt wird und die Grenz-Antriebsmotorlast einer Grenz-Fahrpedalstellung entspricht.

4. Verfahren nach einem der Ansprüche 1 bis 3, **dadurch gekennzeichnet, dass** Mittel (40, 42) zum Erfassen der thermischen Belastung der ersten Kupplung (14) vorgesehen sind und dass die zweite Kupplung (16) zusätzlich zur ersten Kupplung (14) während des Anfahrvorgangs nur dann so weit geschlossen wird, dass sie ein Drehmoment (T_k2) überträgt, wenn ein thermischer Belastungsgrad der ersten Kupplung (14) überschritten wird.

5. Verfahren nach einem der Ansprüche 1 bis 4, **dadurch gekennzeichnet, dass** der Anteil (T_k2) des von der zweiten Kupplung (16) übertragenden Drehmoments abhängig von der Antriebsmotorlast bzw. dem Grad der thermischen Belastung der ersten Kupplung (14) eingesteuert wird.

6. Verfahren nach Anspruch 5, **dadurch gekennzeichnet, dass** die Grenz-Antriebsmotorlast einem Grenzdrehmoment entspricht und der Anteil (T_k2) des von der zweiten Kupplung (16) übertragenen Drehmoments der über das Grenzdrehmoment hinausgehende Anteil eines Gesamtdrehmoments ist.

7. Doppelkupplungsgetriebe mit einer elektronischen Steuereinheit (22, 36), in welcher ein Datenverarbeitungsprogramm zur Durchführung eines Verfahrens nach einem der vorhergehenden Ansprüche abgelegt ist.

8. Doppelkupplungsgetriebe nach Anspruch 7, **dadurch gekennzeichnet, dass** ein Stufensprung zwischen der ersten und der zweiten Gangstufe kleiner als 1,5 ist.

## Claims

1. Method for controlling a starting operation of a vehicle with a dual clutch transmission (2) with an electronic control device (22, 36), the dual clutch transmission (2) comprising a first and a second part transmission (10, 12), and each part transmission (10, 12) having a plurality of switchable gear stages, it being possible for the first part transmission (10) to be drive-connected by a first clutch (14) and for the second part transmission (12) to be drive-connected by a second clutch (16) to a drive engine, and the part transmissions (10, 12) being connected to a common drive shaft (8), a first gear stage of the dual clutch transmission (2) being assigned to the first part transmission (10) and a second gear stage of the dual clutch transmission (2) being assigned to the second part transmission (12), it being possible, during the starting operation, for the first gear stage to be engaged in the first part transmission (10) and for the second gear stage to be engaged in the second part transmission (12) and for the second clutch (16) to be closed to such an extent that it transmits with slip at least part of the torque which is transmitted from the drive motor (6) to the drive shaft (8), **characterized in that** means (38, 36) for detecting a drive-engine load are provided, **in that** means for comparing the detected drive-engine load (T_k1) with a limiting drive-engine load (T_k1_max) are provided and, in addition to the first clutch (14), the second clutch (16) is closed during the starting operation to such an extent that it transmits a torque (T_k2) only when the detected drive-engine load is greater than the limiting drive-engine load.

2. Method according to Claim 1, **characterized in that** the second clutch (16) remains closed at most until the slip (n_sk1) at the first clutch (16) is eliminated.

3. Method according to Claim 1 or 2, **characterized in that** the drive-engine load is determined as a function of an accelerator-pedal position and the limiting drive-engine load corresponds to a limiting accelerator-pedal position.

4. Method according to one of Claims 1 to 3, **characterized in that** means (40, 42) for detecting the thermal loading of the first clutch (14) are provided, and **in that**, in addition to the first clutch (14), the second clutch (16) is closed during the starting operation to such an extent that it transmits a torque (T_k2) only when a degree of thermal loading of the first clutch (14) is exceeded.

5. Method according to one of Claims 1 to 4, **characterized in that** the proportion (T k2) of the torque transmitted by the second clutch (16) is regulated as a function of the drive-engine load and/or the degree of thermal loading of the first clutch (14).

6. Method according to Claim 5, **characterized in that** the limiting drive-engine load corresponds to a limiting torque and the proportion (T_k2) of the torque which is transmitted by the second clutch (16) is that proportion of an overall torque which goes beyond the limiting torque.

7. Dual clutch transmission with an electronic control unit (22, 36), in which a data processing program for carrying out a method according to one of the preceding claims is stored.

8. Dual clutch transmission according to Claim 7, **characterized in that** a stage jump between the first and the second gear stage is smaller than 1.5.

## Revendications

1. Procédé de commande d'une procédure de démarrage d'un véhicule avec une boîte de vitesses à double embrayage (2) comprenant un système de commande électronique (22, 36), la boîte de vitesses à double embrayage (2) comprenant une première et une deuxième boîte de vitesses partielle (10, 12), et chaque boîte de vitesses partielle (10, 12) présentant plusieurs rapports de vitesse commutables, la première boîte de vitesses partielle (10) pouvant être connectée par entraînement à un moteur d'entraînement par un premier embrayage (14) et la deuxième boîte de vitesses partielle (12) pouvant être connectée par entraînement à un moteur d'entraînement par un deuxième embrayage (16), et les boîtes de vitesses partielles (10, 12) étant connectées à un arbre d'entraînement commun (8), un premier rapport de vitesse de la boîte de vitesses à double embrayage (2) étant associé à la première boîte de vitesses partielle (10) et un deuxième rapport de vitesse de la boîte de vitesses à double embrayage (2) étant associé à la deuxième boîte de vitesses partielle (12), et pendant la procédure de démarrage, dans la première boîte de vitesses partielle (10), le premier rapport de vitesse pouvant être enclenché et dans la deuxième boîte de vitesses partielle (12) le deuxième rapport de vitesse pouvant être enclenché, et le deuxième embrayage (16) pouvant être fermé dans une mesure telle qu'il transfère par glissement au moins une partie du couple transmis du moteur d'entraînement (6) à l'arbre d'entraînement (8), **caractérisé en ce que** des moyens (38, 36) sont prévus pour détecter une charge du moteur d'entraînement, **en ce que** des moyens pour comparer la charge du moteur d'entraînement détectée (T_k1) avec une charge du moteur d'entraînement limite (T_k1_max) sont prévus et le deuxième embrayage (16), en plus du premier embrayage (14), n'est fermé pendant la procédure de démarrage dans une mesure telle qu'il transfère un couple (T_k2), que lorsque la charge du moteur d'entraînement détectée est supérieure à la charge du moteur d'entraînement limite.

2. Procédé selon la revendication 1, **caractérisé en ce que** le deuxième embrayage (16) reste fermé au maximum jusqu'à ce que le glissement (n_sk1) au niveau du premier embrayage (16) se soit achevé.

3. Procédé selon la revendication 1 ou 2, **caractérisé en ce que** la charge du moteur d'entraînement est déterminée en fonction d'une position de la pédale d'accélération, et la charge du moteur d'entraînement limite correspond à une position de la pédale d'accélération limite.

4. Procédé selon l'une quelconque des revendications 1 à 3, **caractérisé en ce que** des moyens (40, 42) sont prévus pour détecter la contrainte thermique du premier embrayage (14) et **en ce que** le deuxième embrayage (16), en plus du premier embrayage (14), n'est fermé pendant la procédure de démarrage dans une mesure telle qu'il transfère un couple (T_k2), que lorsque un degré de contrainte thermique du premier embrayage (14) est dépassé.

5. Procédé selon l'une quelconque des revendications 1 à 4, **caractérisé en ce que** la proportion (T_k2) du couple transmis par le deuxième embrayage (16) est commandée en fonction de la charge du moteur d'entraînement ou du degré de contrainte thermique du premier embrayage (14).

6. Procédé selon la revendication 5, **caractérisé en ce que** la charge du moteur d'entraînement limite correspond à un couple limite et la proportion (T_k2) du couple transmis par le deuxième embrayage (16) est la proportion d'un couple total dépassant le couple limite.

7. Boîte de vitesses à double embrayage comprenant une unité de commande électronique (22, 36), dans laquelle est enregistré un programme de traitement des données pour mettre en oeuvre un procédé selon l'une quelconque des revendications précédentes.

8. Boîte de vitesses à double embrayage selon la revendication 7, **caractérisée en ce qu'**un saut de rapport entre le premier et le deuxième rapport de vitesse est inférieur à 1,5.
